# EUROPEAN PATENT SPECIFICATION

(11) **EP 2 694 844 B1**
(45) Date of publication and mention of the grant of the patent: **20.01.2016**
(21) Application number: 12728778.7
(22) Date of filing: 02.04.2012
(51) Int. Cl.: F16H 55/36, F16D 27/00, F16D 27/105, F16D 13/08, F16D 41/20, F16D 67/06

(54) **DECOUPLABLE PULLEY FOR A BELT OR CHAIN DRIVE**
ENTKOPPELBARE RIEMENSCHEIBE FÜR EINEN RIEMEN ODER EIN KETTENGETRIEBE
POULIE DÉCOUPLABLE POUR UNE TRANSMISSION PAR COURROIE OU PAR CHAÎNE

(30) Priority: 01.04.2011 IT TO20110300
(43) Date of publication of application: 12.02.2014
(73) Proprietor: Dayco Europe S.R.L., Chieti (IT)
(72) Inventor: CARICCIA, Gianluca, I-09170 Oristano (IT); LICATA, Federico Domenico, I-10131 Torino (IT)
(74) Representative: Franzolin, Luigi
(86) International application number: PCT/IB2012/051616
(87) International publication number: WO 2012/131663

(56) References cited:
- WO-A1-03/104673
- WO-A1-2007/108020
- AU-B2- 576 954
- GB-A- 883 608
- US-A- 6 047 805

## Description

### TECHNICAL FIELD

The present invention relates to a decouplable pulley in particular for a belt drive of an internal-combustion engine for a motor vehicle.

### BACKGROUND ART

A decouplable pulley comprises a crown wheel designed to co-operate with a belt of a belt drive, for example of an accessory drive, a hub designed to be connected to the input shaft of an accessory, and a coupling for connecting selectively the hub to the crown wheel. When the coupling is closed, the pulley and the hub are connected in rotation, and torque is transferred between the belt and the input shaft. When the coupling is open there is no transfer of torque between the belt and the input shaft.

The coupling is operated via an actuator, for example an electromagnetic actuator, controlled via the electronic control unit of the internal-combustion engine.

When the coupling comprises a band spring, the hub couples to / decouples from the crown wheel since the turns of the band spring vary their own diameter.

When the coupling is open, it is expedient to keep the band spring in a stable position to prevent an unforeseeable closing and/or damage due to excessive rubbing between the fixed turns and surfaces in rotation together with the crown wheel.

Document AU 576 954 B2 shows a pulley according to the preamble of claim 1.

### DISCLOSURE OF INVENTION

The aim of the present invention is to provide a decouplable pulley that will be able to meet the requirement specified above.

The aim of the present invention is achieved via a decouplable pulley according to Claim 1.

### BRIEF DESCRIPTION OF THE DRAWINGS

The invention will now be described with reference to the annexed drawings, which illustrate a non-limiting example of embodiment thereof and in which:

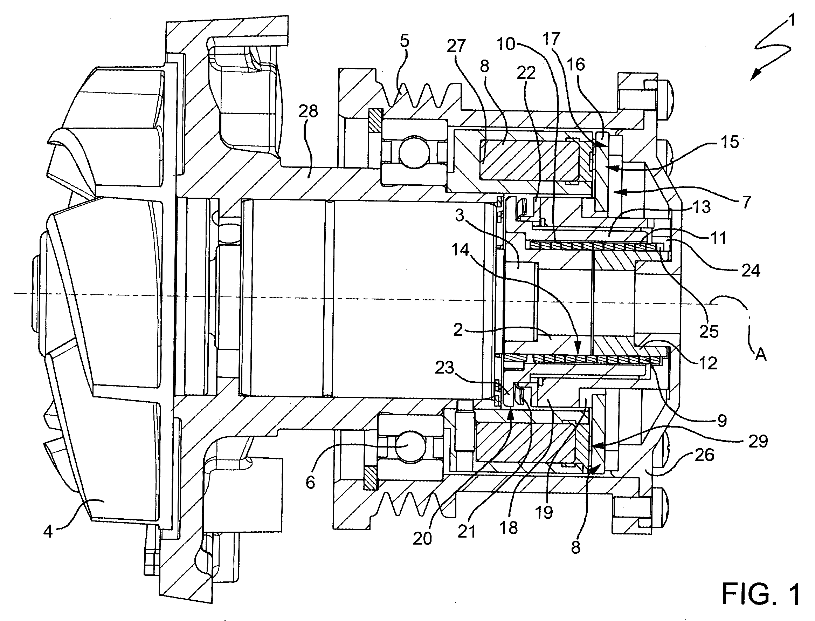

- Figure 1 is a longitudinal section of a decouplable pulley according to a first embodiment of the present invention; and
- Figure 2 is a longitudinal section of a decouplable pulley according to a further embodiment of the present invention.

### BEST MODE FOR CARRYING OUT THE INVENTION

In the figures, designated as a whole by 1 is a decouplable pulley comprising a hub 2 designed to be connected to a shaft 3 that controls an impeller 4 of a water pump of a cooling circuit of an internal-combustion engine for motor vehicles and/or heavy vehicles.

The pulley 1 further comprises a crown wheel 5 designed to be connected to an endless flexible element, preferably a poly-V belt, a bearing 6 for radially supporting at least the crown wheel 5, and a coupling 7 for controlling the torsional coupling between the hub 2 and the crown wheel 5.

In particular, the coupling 7 comprises an actuator 8 and a band spring 9 having an end portion 10 connected to the hub 2 and an end portion 11 angularly connected to the actuator 8 so as to follow the angular displacements of the latter. The actuator 8 is mobile between a first position in which the band spring 9 transfers by friction torque between the hub 2 and the crown wheel 5 and a second position in which the crown wheel 5 rotates with respect to the hub 2, and the impeller 4 does not receive torque from the endless flexible element.

The pulley 1 further comprises a bushing 12 surrounded by part of the turns of the band spring 9 and rotationally fixed with respect to the crown wheel 5, and an element fixed to the hub 2 and comprising a tubular wall 13 that surrounds at least a longitudinal portion of the band spring 9.

The actuator 8 moves the end portion 11 of the band spring 9 so as to render the latter fixed either with respect to the bushing 12, in order to transmit the motion to the hub 2 by friction, or with respect to an element that is fixed with respect to a casing of the internal-combustion engine.

In greater detail, when the actuator 8 is in the first position, the band spring 9 contacts by friction an external cylindrical surface of the hub 2 and, at the same time, an external cylindrical surface of the bushing 12. The direction of winding of the turns of the band spring 9 is such that the pressure exerted by the latter on the hub 2 and the bushing 12 increases when the impeller 4 tends to slow down on account of a resistant torque. It should be pointed out that the impeller 4 rotates always in one and the same direction in order to cause flow of a cooling liquid in the internal-combustion engine.

Preferably, the hub 2 and the bushing 12 have the same diameter and are coaxial.

When the actuator 8 is switched into the second position, the end portion 11 is fixed with respect to the casing of the internal-combustion engine, via the inertia of the impeller, and the turns of the band spring 9 unwind. Accordingly, the diameter increases in such a way that the bushing 12 can turn with respect to the end portion 11. In particular, the diameter of the turns of the band spring 9 increases until the turns contact an internal surface 14 of the tubular portion 13 and are set at a distance from the bushing 12. The annular gap between the hub 2, the bushing 12, and the internal cylindrical surface 14 is sized in such a way that, on the basis of the cross section of the band spring 9, the impeller 4 can perform a pre-set number of revolutions before being blocked by the action of the turns of the spring on the internal cylindrical surface 14.

The actuator 8 comprises a mobile element 15 for coupling the end portion 11 of the band spring 9 either to the crown wheel 5 or to an element fixed with respect to the casing of the engine. The mobile element 15 comprises a friction portion 16 that contacts or, alternatively, is set at a distance from a surface 17 fixed with respect to the crown wheel 5 when the actuator 8 is in the first position or in the second position, respectively. Preferably, the friction portion 16 is braked when the actuator 8 is in the second position. For example, the braking is due to the contact of the friction portion 16 with the element fixed to the casing of the internal-combustion engine when the actuator 8 is in the second position.

The mobile element 15 further comprises an engagement portion 18 connected to the end portion 11, and a torsional joint 19 for decoupling, in rotation, the friction portion 16 from the engagement portion 18 and dissipating at least partially the inertial action of the impeller 4 when the actuator 8 is in the second position.

In particular, the torsional joint 19 can dissipate the inertial action of the impeller 4 either by dry friction or else by internal friction, i.e., by hysteresis of deformation of a material. Preferably, the friction portion 16 is mounted with interference on the torsional joint 19 and, once the limit torque defined by the coefficient of static friction between the torsional joint 19 and the friction portion 16 and/or the engagement portion 18 is overcome, the friction portion 16 and the engagement portion 18 turn with respect to one another.

Preferably, the pulley 1 comprises a device 20 for maintaining the turns of the band spring 9 separate from the bushing 12 when the actuator 8 is in the second position. In particular, the device 20 opposes rotation of the hub 2 and performs the function of a brake.

The brake 20 comprises a spring 21 and a friction element 22 loaded by the spring 21 for applying a friction torque on the hub 2. The brake 20 is configured by the load of the spring 21 and by the coefficient of friction of the friction element 22 so as to oppose the elastic torque that the band spring 9 applies on the hub 2 when the actuator 8 is in the second position and the friction portion 16 is fixed with respect to the casing of the internal-combustion engine.

Preferably, the tubular portion 13 is rigidly connected to a flange 23 having an internal diameter fixed to the hub 2 and a face 24 loaded via the spring 21 in order to hold the friction portion 16 against the surface 17. In this way, the actuator 8 is stably held in the first position and must apply an action such as to overcome the load of the spring 21 in order to switch into the second position.

When the actuator 8 is switched into the second position, the action of the spring 21 between the hub 2 and the mobile element 15 is greater than the torque of the band spring 9 generated by unwinding of the turns, and, in this way, the band spring 9 is radially set at a distance from the bushing 12.

Preferably, the friction torque between the mobile element 15 and the hub 2 is lower than the torque between the friction portion 16 and the engagement portion 18. In this way, when the actuator 8 is in the second position and the friction portion 16 is braked by friction and in particular stopped against the element fixed to the casing of the internal-combustion engine, initially also the engagement element 18 is blocked. The further brake 20 consequently opposes relative rotation of the end portions 10 and 11 generated by the inertial load on the impeller 4. Only after the turns of the band spring 9 are completely unwound against the cylindrical surface 14, does the brake 20 overcome the elastic torque of return between the end portions 10 and 11 and maintain the turns radially separate from the bushing 12. In the case of residual inertial load of the impeller 4, for example at high speeds of rotation, the torsional joint 19 slides so as to dissipate in friction said inertial load, and the tubular portion 13 rotates rigidly with the hub 2, the brake 20, and the band spring 9 until the inertial action of the impeller 4 is totally dissipated.

Advantageously, the friction element 22 is connected in a rigid way in regard to rotation and in an axially mobile way to the hub 2 for example via a grooved coupling with the tubular wall 13. In this way, the spring 21, the friction element 22, and the flange 23 are rigidly connected in rotation.

According to a preferred embodiment of the present invention, the actuator 8 is a linear actuator along the axis A, and both the friction portion 16 and the engagement portion 18 are mobile in a direction parallel to the axis A. Moreover, the engagement element 18 surrounds the tubular portion 13 and can extend longitudinally between at least a portion of the hub 2 and a portion of the bushing 12. The engagement element 18 can be connected to the end portion 11 via a seat 24 where a tooth 25 of the end portion 11 is housed by shape fit.

The bushing 12 is preferably connected to the crown wheel 5 via a flange 26 that closes the actuator 8 in a compartment moreover delimited at least by the bushing 12 and by the bearing 6.

The surface 17 is preferably defined by a ring rigidly connected, for example by gluing, on the flange 26.

Advantageously, the actuator 8 is electromagnetic and comprises a coil 27 set between the friction portion 16 and the bearing 6. The coil 27 surrounds at least the brake 20 and an axial portion of the hub 2 and is electromagnetically coupled to the friction portion 16, which is made of a ferromagnetic material and consequently defines an element controlled by the coil 27.

Preferably, the bearing 6 is mounted on a tubular body 28 rigidly connected to the internal-combustion engine, for example, via a threaded connection. In particular, the tubular body 28 defines the centring element for defining an axis A of rotation of the impeller 4. The coil 27 is mounted on the tubular body 28 and defines the fixed element that contacts the friction portion 16 when the actuator 8 is in the second position.

Preferably, the turns of the coil 27 are comoulded in a polymeric resin that moreover defines a braking surface 29 that directly contacts the friction portion 16 when the actuator 8 is in the second position.

Advantageously, the flange 23 exits radially from the tubular portion 13 and is made of a single piece with the latter.

The advantages that the decouplable pulley 1 affords are described in what follows.

The brake 20 opposes and in particular overcomes the elastic reaction determined by the relative rotation between the end portions 10 and 11. When the band spring 9 is to be closed around the hub 2 and the bushing 12, the braking action is lower than the torque generated by the contact between the friction portion 16 and the surface 17.

When, instead, the actuator 8 is in the second position, the brake 20 keeps the turns of the band spring 9 stably set at a distance from the bushing 12, said condition being reached thanks to the inertial load of the impeller 4. Any friction is consequently reduced, and the service life increases.

In addition, the brake 20 contributes to dissipating the inertial load of the impeller 4 for a relative rotation between the hub 2 and the engagement portion 18 such that all the turns of the band spring 9 are in contact against the tubular portion 13.
The configuration of the pulley 1 is moreover particularly compact both in the axial direction and in the radial direction.

Finally, it is clear that modifications or variations may be made to the decouplable pulley described and illustrated herein, without thereby departing from the sphere of protection as defined by the annexed claims.

In particular, the end portion 10 of the band spring 9 can be fixed to the hub 2 either by radial interference or else by shape fit via a tooth similar to the tooth 25.

In addition, a torsional dissipation joint, which has the same function as the joint 19, can be mounted in positions other than the one illustrated. For example, there may be envisaged an decoupling with dissipation between the end portion 10 and the hub 2.

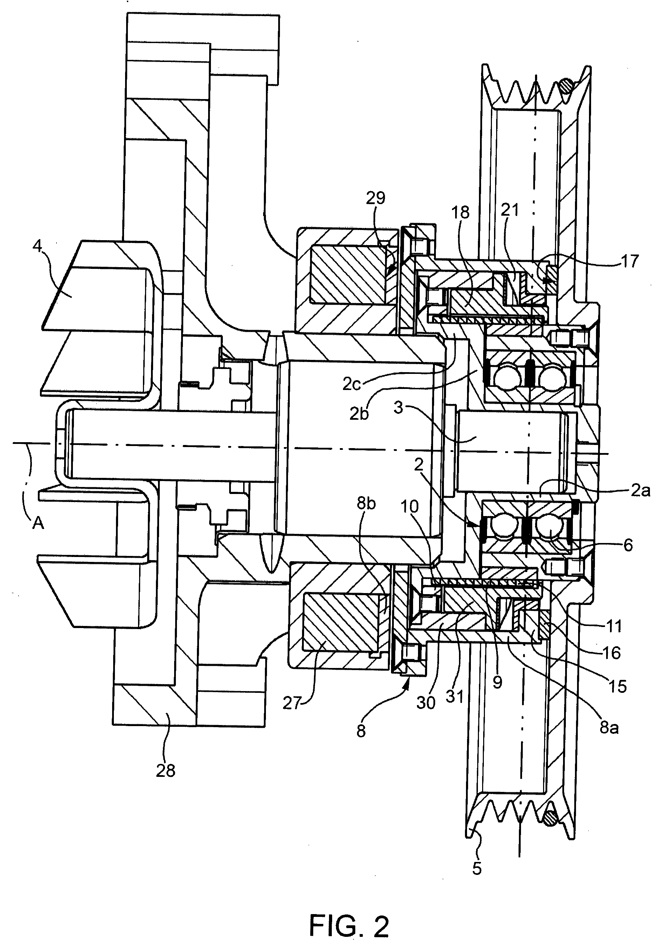

An example of the latter embodiment is illustrated in Figure 2 where reference numbers identical to those referred to previously are used to designate elements that are functionally identical to the ones already described.

In particular, the hub 2 is rigidly fixed to the shaft 3 and supports the bearing 6 radially. The hub 2 comprises a portion 2a surrounded by the bearing 6, a flange 2b coming out of the portion 2a and set between the bearing 6 and the tubular body 28, and a friction portion 2c rigidly connected to the flange 2b.

The mobile element 15 of the actuator 8 comprises a hollow body 8a radially housing at least the band spring 9 and the friction portion 2c, a ferromagnetic element 2b facing the coil 27 and rigidly connected to the hollow body 8a, and the friction element 16 co-operating selectively with the pulley 5. Preferably, the mobile element 15 defines a rigid body that is mobile preferably in an axial direction between the first and second positions described previously.

The end portion 10 of the band spring 9 is coupled to the friction element 2c so as to turn freely in one direction of rotation and couple by friction on account of a variation of diameter in the opposite direction of rotation so as to define a free wheel.

The end portion 11 is angularly connected to an insert 30 radially centred on the hub 2 and surrounding the bearing 6. In particular, the hub 2 comprises a contrast surface 31 for axial arrest of the insert 30. The contrast surface 31 preferably surrounds with radial clearance a portion of the insert 30 that can turn with respect to the contrast surface 31. In the embodiment of Figure 2, the band spring 9 and the bushing 12 surround the bearing 6, and the bushing 12 has substantially the same external diameter as the friction portion 2c to enable coupling by friction with the band spring 9.

The spring 21 is housed in the hollow body 8a and is positioned between the insert 30 and the actuator 8 to keep the latter against the pulley 5. In addition, the mobile element 15 is connected in an angularly fixed and axially mobile way to the hub 2 preferably via a grooved coupling between the hollow body 8a and the insert 30. The grooved coupling is set axially between the spring 21 and the pulley 5 and surrounds the bearing 6.

When the actuator 8 is in the first position, the insert 30 drives in rotation, via the grooved coupling, the band spring 9, which modifies its own diameter, in particular, it narrows its own diameter, rigidly coupling by friction on the friction portion 2c. The impeller 4 is thus driven in rotation.

When the actuator 8 is switched into the second position against the action of the spring 21, the ferromagnetic element 8b is braked by the braking surface 29 of the coil 27, and the contrast surface 31 tends to pass angularly beyond the insert 30 on account of the inertia of the impeller 4. In this transient, the end portion 11 is slowed down by the friction torque acting between the actuator 8 and the coil 27 until it stops, and a further friction torque acts on the end portion 10 on account of sliding with the impeller 4.

During said transient, the end portions 10 and 11 are loaded by a torque, which decreases until it stabilizes at a constant value when the insert 30 no longer rotates with respect to the contrast surface 31, and this is sufficient to generate a relative angular movement between the end portions 10, 11 for decoupling the band spring 9 from the bushing 12 in such a way that the pulley 5 can accelerate or decelerate without driving the impeller 4.

In particular, when the impeller 4 is stopped via the action of the spring 21, the angular position of the hub 2 and the radial interference is such as to apply a torsional torque on the spiral spring, which deforms accordingly and disengages from the bushing 12. In this condition, the band spring 9 may or may not contact the bushing 12. In any case, the radial pressure of the band spring 9 is reduced by the action of the spring 21 on the insert 30.

The amount of energy dissipated during the transient between switching into the second position and arrest by friction of the impeller 4 depends upon the initial interference fit between the end portion 10 and the friction portion 2c, and upon the mechanical characteristics of the spring 21 and of the surfaces of contact between the insert 30 and the contrast surface 31. In any case, said sliding torque between the hub 2 and the actuator 8 is lower than the friction torque between the braking surface 29 and the actuator 8 in the second position.

In addition, the action of the spring 21 on the insert 30 brakes the impeller 4 and thus the hub 2 after the actuator 8 has been switched into the second position. Consequently, the insert 30 performs both the function of dissipator between the actuator 8 and the hub 2 and the function of brake between the end portion 11 and the hub 2. The reason for this is that in the embodiment of Figure 2 the end portion 11 is connected in an angularly fixed way to the actuator 8.

Moreover, the pulley 1 can be modified so that the band spring 9 will couple the pulley 5 to the hub 2 when the actuator 8 is in the first position following upon a radial expansion within a pair of internal cylindrical surfaces defined, respectively, by elements fixed with respect to the pulley 5 and to the hub 2.

## Claims

1. A pulley comprising a hub (2), a crown wheel (5) designed to co-operate with an endless flexible element, a band spring (9) for coupling selectively in rotation said hub (2) and said crown wheel (5), a fixed braking surface (29), and a controlled mobile element (15) torsionally connected to said hub (2) at least via said band spring (9) and mobile between a first position, in which said hub (2) and said crown wheel (5) are fixed in rotation via said band spring (9), and a second position, in which said braking surface (29) contacts said controlled element (16) and determines a relative rotation between a first end portion (10) and a second end portion (11) of said band spring (9) for rotationally decoupling said crown wheel (5) with respect to said hub (2) when the latter is turning, said pulley being **characterized in that** it comprises a brake (20, 30) set between said hub (2) and said second end portion (11) and configured for opposing the relative rotation between said hub (2) and said second end portion (11) when said controlled element (16) is in the second position.

2. The pulley according to Claim 1, **characterized in that** said brake (20) comprises a spring (21) for generating a friction load between said hub (2) and said second end portion (11) and, at the same time, keeping said actuator (8) stably in said first position.

3. The pulley according to Claim 2, **characterized in that** it comprises an engagement portion (18) connected to said second end portion (11) and moved via said controlled element (16).

4. The pulley according to Claim 3, **characterized in that** said brake (20) comprises a ring (22) coupled in a rigid way in regard to rotation and in an axially mobile way to said hub (2) and loaded via said spring (21) against said engagement portion (18).

5. The pulley according to Claim 4, **characterized in that** it comprises a tubular element (13) surrounding said band spring (9) and radially supporting said ring (22).

6. The pulley according to Claim 3, **characterized in that** it comprises an insert (30) angularly connected to said second end portion (11) and coupled in an angularly fixed and axially mobile way to said controlled mobile element (15).

7. The pulley according to Claim 6, **characterized in that** said first end portion (10) defines a free wheel.

8. The pulley according to either Claim 6 or Claim 7, **characterized in that** said insert (30) axially bears upon said hub (2).

9. The pulley according to any one of Claims 6 to 8, **characterized in that** it comprises a bearing for supporting said crown wheel (5) and **in that** said insert (30) surrounds said bearing (6).

10. The pulley according to any one of the preceding claims, **characterized in that** it comprises a bushing (12) fixed with respect to said crown wheel (5) and surrounded by said second end portion (11) of said band spring (9).

11. The pulley according to any one of the preceding claims, **characterized in that** said brake (20; 30) comprises at least one insert radially centred with respect to said hub (2).

12. The pulley according to any one of the preceding claims, **characterized in that** it comprises an electromagnetic coil (27), which surrounds said band spring (9) at least partially and is electromagnetically coupled to said controlled element (16).

## Patentansprüche

1. Riemenscheibe, aufweisend: eine Nabe (2), ein Tellerrad (5), das dafür ausgelegt ist, mit einem endlosen flexiblen Element zusammenzuwirken, eine Bandfeder (9) zur selektiven Drehkopplung der Nabe (2) und des Tellerrads (5), eine feste Bremsfläche (29) und ein gesteuertes bewegliches Element (15), das zumindest über die Bandfeder (9) mit der Nabe (2) torsionsverbunden ist und zwischen einer ersten Position, in der die Nabe (2) und das Tellerrad (5) über die Bandfeder (9) rotatorisch festgelegt sind, und einer zweiten Position beweglich ist, in der die Bremsfläche (29) das gesteuerte Element (16) berührt und eine relative Drehung zwischen einem ersten Endabschnitt (10) und einem zweiten Endabschnitt (11) der Bandfeder (9) bestimmt, um das Tellerad (5) in Bezug auf die Nabe (2) rotatorisch zu entkoppeln, wenn sich letztere dreht, wobei die Riemenscheibe **dadurch gekennzeichnet ist, dass** sie eine Bremse (20, 30) aufweist, die zwischen der Nabe (2) und dem zweiten Endabschnitt (11) eingesetzt ist und die dafür ausgelegt ist, der relativen Drehung zwischen der Nabe (2) und dem zweiten Endabschnitt (11) entgegenzuwirken, wenn das gesteuerte Element (16) die zweite Position einnimmt.

2. Riemenscheibe nach Anspruch 1, **dadurch gekennzeichnet, dass** die Bremse (20) eine Feder (21) aufweist zum Erzeugen einer Reibkraft zwischen der Nabe (2) und dem zweiten Endabschnitt (11) und zum gleichzeitigen Stabilhalten des Stellglieds (8) in der ersten Position.

3. Riemenscheibe nach Anspruch 2, **dadurch gekennzeichnet, dass** sie einen Eingriffsabschnitt (18) aufweist, der mit dem zweiten Endabschnitt (11) verbunden ist und über das gesteuerte Element (16) bewegt wird.

4. Riemenscheibe nach Anspruch 3, **dadurch gekennzeichnet, dass** die Bremse (20) einen Ring (22) aufweist, der rotationsstarr und axial beweglich mit der Nabe (2) verbunden ist und über die Feder (21) entgegen dem Eingriffsabschnitt (18) mit einer Kraft beaufschlagt wird.

5. Riemenscheibe nach Anspruch 4, **dadurch gekennzeichnet, dass** sie ein röhrenförmiges Element (13) aufweist, das die Bandfeder (9) umgibt und das den Ring (22) radial stützt.

6. Riemenscheibe nach Anspruch 3, **dadurch gekennzeichnet, dass** sie einen Einsatz (30) aufweist, der winkelmäßig mit dem zweiten Endabschnitt (11) verbunden ist und winkelfest und axial beweglich mit dem gesteuerten beweglichen Element (15) verbunden ist.

7. Riemenscheibe nach Anspruch 6, **dadurch gekennzeichnet, dass** der erste Endabschnitt (10) einen Freilauf definiert.

8. Riemenscheibe nach Anspruch 6 oder Anspruch 7, **dadurch gekennzeichnet, dass** der Einsatz (30) axial an der Nabe (2) anliegt.

9. Riemenscheibe nach einem der Ansprüche 6 bis 8, **dadurch gekennzeichnet, dass** sie ein Lager zum Stützen des Tellerrads (5) aufweist und dass der Einsatz (30) das Lager (6) umgibt.

10. Riemenscheibe nach einem der vorangehenden Ansprüche **dadurch gekennzeichnet, dass** sie eine Buchse (12) aufweist, die in Bezug auf das Tellerrad (5) festgelegt ist und vom zweiten Endabschnitt (11) der Bandfeder (9) umgeben ist.

11. Riemenscheibe nach einem der vorangehenden Ansprüche, **dadurch gekennzeichnet, dass** die Bremse (20; 30) mindestens einen Einsatz umfasst, der radial in Bezug auf die Nabe (2) zentriert ist.

12. Riemenscheibe nach einem der vorangehenden Ansprüche, **dadurch gekennzeichnet, dass** sie eine elektromagnetische Spule (27) aufweist, welche die Bandfeder (9) zumindest zum Teil umgibt und elektromagnetisch mit dem gesteuerten Element (16) verbunden ist.

## Revendications

1. Poulie comprenant un moyeu (2), une roue plate (5) conçue pour coopérer avec un élément flexible sans fin, un ressort à bande (9) pour coupler de façon sélective en rotation ledit moyeu (2) et ladite roue plate (5), une surface de freinage fixe (29) et un élément mobile commandé (15) relié en torsion au dit moyeu (2) au moins par l'intermédiaire dudit ressort à bande (9) et mobile entre une première position, dans laquelle ledit moyeu (2) et ladite roue plate (5) sont fixés en rotation par l'intermédiaire dudit ressort à bande (9), et une seconde position, dans laquelle ladite surface de freinage (29) est en contact avec ledit élément commandé (16) et détermine une rotation relative entre une première partie d'extrémité (10) et une seconde partie d'extrémité (11) dudit ressort à bande (9) pour désolidariser en rotation ladite roue plate (5) par rapport au dit moyeu (2) lorsque ce dernier tourne, ladite poulie étant **caractérisée en ce qu'**elle comprend un frein (20, 30) placé entre ledit moyeu (2) et ladite seconde partie d'extrémité (11) et configuré pour s'opposer à la rotation relative entre ledit moyeu (2) et ladite seconde partie d'extrémité (11) lorsque ledit élément commandé (16) se trouve dans la seconde position.

2. Poulie selon la revendication 1, **caractérisée en ce que** ledit frein (20) comprend un ressort (21) pour générer une charge de friction entre ledit moyeu (2) et ladite seconde partie d'extrémité (11) et, en même temps, garder ledit actionneur (8) de façon stable dans ladite première position.

3. Poulie selon la revendication 2, **caractérisée en ce qu'**elle comprend une partie de mise en prise (18) raccordée à ladite seconde partie d'extrémité (11) et déplacée par l'intermédiaire dudit élément commandé (16).

4. Poulie selon la revendication 3, **caractérisée en ce que** ledit frein (20) comprend une bague (22) couplée de manière rigide en ce qui concerne la rotation et de manière axialement mobile au dit moyeu (2) et chargée par l'intermédiaire dudit ressort à bande (21) contre ladite partie de mise en prise (18).

5. Poulie selon la revendication 4, **caractérisée en ce qu'**elle comprend un élément tubulaire (13) qui entoure ledit ressort à bande (9) et supporte radialement ladite bague (22).

6. Poulie selon la revendication 3, **caractérisée en ce qu'**elle comprend une pièce rapportée (30) raccordée de façon angulaire à ladite seconde partie d'extrémité (11) et couplée de manière angulairement fixe et axialement mobile au dit élément mobile commandé (15).

7. Poulie selon la revendication 6, **caractérisée en ce que** ladite première partie d'extrémité (10) définit une roue libre.

8. Poulie selon soit la revendication 6, soit la revendication 7, **caractérisée en ce que** ladite pièce rapportée (30) supporte axialement ledit moyeu (2).

9. Poulie selon l'une quelconque des revendications 6 à 8, **caractérisée en ce qu'**elle comprend un palier pour supporter ladite roue plate (5) et **en ce que** ladite pièce rapportée (30) entoure ledit palier (6).

10. Poulie selon l'une quelconque des revendications précédentes, **caractérisée en ce qu'**elle comprend une douille (12) fixée par rapport à ladite roue plate (5) et entourée par ladite seconde partie d'extrémité (11) dudit ressort à bande (9).

11. Poulie selon l'une quelconque des revendications précédentes, **caractérisée en ce que** ledit frein (20 ; 30) comprend au moins une pièce rapportée centrée radialement par rapport au dit moyeu (2).

12. Poulie selon l'une quelconque des revendications précédentes, **caractérisée en ce qu'**elle comprend une bobine électromagnétique (27), qui entoure ledit ressort à bande (9) au moins partiellement et est couplée de manière électromagnétique au dit élément commandé (16).
